(19) Europäisches Patentamt
European Patent Office
Office européen des brevets

(11) **EP 2 998 345 B1**

(12) **EUROPEAN PATENT SPECIFICATION**

(45) Date of publication and mention
of the grant of the patent:
**05.12.2018 Bulletin 2018/49**

(21) Application number: **14850407.9**

(22) Date of filing: **01.10.2014**

(51) Int Cl.:
*C08J 9/00* (2006.01)    *C08L 75/04* (2006.01)
*C08J 9/28* (2006.01)    *B24B 41/06* (2012.01)
*B24B 37/27* (2012.01)

(86) International application number:
**PCT/KR2014/009276**

(87) International publication number:
**WO 2015/050381 (09.04.2015 Gazette 2015/14)**

(54) **POLYURETHANE SUPPORT PAD**

POLYURETHANUNTERLAGE

PATIN DE SUPPORT EN POLYURÉTHANE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.10.2013   KR 20130118685
24.09.2014   KR 20140127711**

(43) Date of publication of application:
**23.03.2016   Bulletin 2016/12**

(73) Proprietor: **LG Chem, Ltd.
Seoul 07336 (KR)**

(72) Inventors:
• **SHIN, Dong Mok
Daejeon 305-738 (KR)**
• **KIM, Na Ri
Daejeon 305-738 (KR)**
• **AHN, Byeong In
Daejeon 305-738 (KR)**
• **CHOI, Sang Soon
Daejeon 305-738 (KR)**
• **TAE, Young Ji
Daejeon 305-738 (KR)**
• **SIN, Chang Hoon
Daejeon 305-738 (KR)**

(74) Representative: **Goddar, Heinz J.
Boehmert & Boehmert
Anwaltspartnerschaft mbB
Pettenkoferstrasse 22
80336 München (DE)**

(56) References cited:
JP-A- 2006 344 892    JP-A- 2007 245 571
JP-A- 2009 291 854    JP-A- 2013 023 691
JP-A- 2013 198 969    JP-B2- 5 197 914
KR-A- 20070 019 709   KR-A- 20080 005 558
KR-A- 20090 130 149   KR-A- 20120 081 955

EP 2 998 345 B1

**Description**

[TECHNICAL FIELD]

The present invention relates to a polyurethane mounting pad, see e.g. KR 20120081955 A, more particularly to a polyurethane mounting pad that has high compressibility and excellent elastic power under practical polishing conditions, and can realize more uniform and high efficiency polishing to decrease defective polishing rate.

[BACKGROUND OF ART]

Since a substrate used in a semiconductor devices or a display device requiring a high degree of integration requires a fine and precise surface, various planarizing methods are being applied therefor. Particularly, with the tendencies of high integration and high performance of semiconductor devices or display devices, a method of polishing by relatively moving a polishing pad and an object to be polished, while supplying a slurry composition comprising polishing particles and various chemical components between the polishing pad and the object to be polished is generally used. In the polishing method, for more precise polishing, the object to be polished is fixed on a mounting pad so as to maintain a constant location and position during a polishing or processing process.

Particularly, for use as a glass substrate for a display, roughness of the surface of a glass substrate and step difference according to the locations are important management factors, and should be controlled within a range of sub-micron to hundreds of microns. And, the waviness should be managed to 40nm level, and particularly, for application as a glass substrate for TFT, it is required to manage the waviness around 20nm

To enable such precise polishing, in addition to controlling of the conditions of polishing process and apparatus, a mounting pad should have high compressibility and compression recovery rate, and the mounting pad should have more uniform thickness, pressure distribution and tension distribution over the whole area.

Thus, previously, a mounting pad having excellent compressibility and compression length as measured by applying high pressure of 1000g/cm$^2$ or more according to JIS standard was prepared, and it was used for a polishing process. However, various defects were generated in the object polished using the mounting pad having excellent compressibility, and there was a problem in that the mounting pad evaluated as having excellent physical properties according to JIS standard cannot realize uniform and precise polishing at low pressure condition, under which polishing of a glass substrate is practically conducted.

Accordingly, there is a demand for the development of a mounting pad having excellent compressibility and compression recovery rate under low pressure that can be practically applied in the field requiring more uniform and precise polishing, for example, for the polishing of a glass substrate for a display.

JP2007 245571 A discloses a laminated sheet comprising a base sheet and polyurethane foamed sheet, wherein the polyurethane foamed sheet has a spherical open cell and a circular hole is formed on the surface of the continuous cell. The compression rate of the laminated polyurethane sheet is 2-10%, and the compressibility is measured at a load stress of 50g/cm$^2$ and 300 g/cm$^2$.

[DETAILED DESCRIPTION OF THE INVENTION]

[Technical Problem]

It is an object of the present invention to provide a polyurethane mounting pad that has high compressibility and excellent elastic power under practical polishing conditions, and can realize more uniform and high efficiency polishing to decrease defective polishing rate.

[Technical Solution]

The present invention provides a polyurethane mounting pad having Low P compressibility of 1 to 10%, the Low P compressibility being the ratio of the difference between a first thickness and a second thickness to the first thickness, the first thickness being measured by applying a pressure of 5g/cm$^2$ to a thickness direction of the mounting pad, and the second thickness being measured by applying a pressure of 100g/cm$^2$ to a thickness direction of the mounting pad, wherein Low P compression length, which is the difference between the first thickness and the second thickness, is 15 to 100 $\mu$m.

Hereinafter, a polyurethane mounting pad according to specific embodiments of the invention will be explained in detail.

As used herein, the term 'mounting pad' refers to a pad that functions for adhering or fixing a carrier to a film to be polished in a polishing process, during a process of preparing a substrate used in a semiconductor or display device.

The inventors realized that in the field requiring precision polishing such as polishing of a glass substrate and the like, low pressure or load of 50 to 400 g/cm$^2$ is applied to a polyurethane mounting pad during a polishing process, and that the force of the above range becomes the cause for generating defects in a glass substrate or an object to be polished, and recognized that even if a mounting pad having excellent physical properties of compressibility and compression length according to the previous JIS standard exceeding the force of the above range is used for polishing of a glass substrate, line flaw or defect is generated in the object to be polished, and thus, defective polishing may occur.

The JIS compressibility that was previously used to evaluate the performance of a polyurethane mounting pad was measured as follows.

* Measurement of JIS L1021-16 compressibility:

A 2.5cm$^2$*3.0cm$^2$ (width * length) specimen of a pad is prepared, the initial load of 100g/cm$^2$ is applied to the specimen for 30 seconds, and then, the initial thickness is measured using a dial gauge or a laser(T0'), and the specimen is allowed to stand under the load of 1120g/cm$^2$ for 5 minutes, and then, the thickness under pressure is measured (T1'). Each measured thickness is applied to the following Formula to calculate compressibility and compression recovery rate.

[Formula 1]

$$\text{JIS compressibility(\%)} = (T0' - T1')*100/T0'$$

In the measurement method of compressibility according to JIS standard, since the initial load is set to 100g/cm$^2$, and the pressure applied during the experiment is set to 1120g/cm$^2$, physical properties such as impact absorption of low pressure, defective polishing rate, and the like in a polishing process during which a pressure of 50 to 400g/cm$^2$ is applied may not be reflected.

Thus, the inventors, as described below, prepared a mounting pad having excellent compressibility and compression length under low pressure through an immersion process in an aqueous solution, a heat treatment process, and the like, confirmed through experiments that such mounting pad is sufficiently compressed under the pressure range that is applied in a practical polishing process, thus realizing more uniform and high efficiency polishing to decrease defective polishing rate, and completed the invention.

According to one embodiment of the invention, provided is a polyurethane mounting pad having Low P compressibility of 1 to 10%, the Low P compressibility being the ratio of the difference between a first thickness and a second thickness to the first thickness, the first thickness being measured by applying a pressure of 5g/cm$^2$ to a thickness direction of the mounting pad, and the second thickness being measured by applying a pressure of 100g/cm$^2$ to a thickness direction of the mounting pad, wherein Low P compression length, which is the difference between the first thickness and the second thickness, is 15 to 100 $\mu$m. Preferably, the Low P compressibility may be 1 to 8%, and the Low P compression length may be 15 to 60 $\mu$m.

As explained above, the Low P compressibility and the Low P compression length are newly defined compressibility herein, and a mounting pad satisfying them may be used in a polishing step during which low pressure or low force is applied, such as polishing of a glass substrate, and the like, to enable more precise and effective polishing, and decrease defective polishing rate.

The Low P compressibility and Low P compression length may be represented by the following General Formula 1 and General Formula 2, respectively:

[General Formula 1]

$$\text{Low P compressibility(\%)} = (T0-T1)*100/T0$$

[General Formula 2]

$$\text{Low P compression length} = T0-T1$$

In the General Formulae 1 and 2, T0 is a first thickness measured by applying a pressure of 5g/cm$^2$ to a

thickness direction of the mounting pad, T1 is a second thickness measured by applying a pressure of 100g/cm² to a thickness direction of the mounting pad.

The thickness of the mounting pad means the average value of the vertical distances between the contact side of the mounting pad that contacts with an object to be polished and the opposite side parallel thereto, and the thickness direction means a vertical direction from the contact side to the opposite side

The pressure of 5g/cm² may be applied for 10 seconds to 1 minute, preferably for 30 seconds. The initial pressure of 5g/cm² may be applied to the mounting pad to form a support for applying a pressure of 100 g/cm² without change in the compression thickness. And, the pressure of 100 g/cm² may be applied for 1 to 10 minutes, preferably 5 minutes.

And, the first and the second thicknesses are measured while applying the above pressure, and measuring devices known to be commonly used for measuring compressibility, such as a dial gauge or laser, and the like may be used without specific limitations.

If the Low P compressibility is 1% or more, the mounting pad may be sufficiently compressed even at low pressure conditions, under which practical glass polishing is conducted, to evenly distribute non-uniform force added to glass, thus decreasing defective polishing rate. And, if the Low P compression length is 15$\mu$m or more, the mounting pad may have large compressibility under the same pressure, and distribute impact better, thus achieving more uniform and precise polishing. Particularly, in the case of a mounting pad having Low P compressibility and Low P compression length that do not fall within the above ranges, pressure may be locally non-uniformly applied, or impact absorption may be insufficient, and thus, various defects such as pad mark and the like may be generated in the polished glass substrate. More specifically, the mounting pad that does not fall within the above ranges may not appropriately control roughness of the surface on which the pad is installed, and thus, corresponding step height may be transcribed to glass when polishing the glass, and defective polishing due to the vibration induced by the polishing apparatus of the pad may also be transcribed to the glass to generate various defects.

And, the polyurethane mounting pad may have a density of 0.10g/cm³ to 0.50g/cm³, preferably 0.15 to 0.30 g/cm³, and a thickness of 0.1 to 3mm, preferably 0.5 to 2mm.

And, inside of the polyurethane mounting pad, pores having the longest diameter of 50$\mu$m to 2 mm, preferably 300$\mu$m to 2 mm may be formed. And, the pores distributed inside of the polyurethane mounting pad may have an aspect ratio of 2 to 10 (the ratio of the length to the width), preferably 3 to 7. The long and large pores inside of the polyurethane mounting pad may decrease hardness of the pad, and thus a smooth pad having high compressibility can be prepared, and the air trapped between the mounting pad and a film to be polished may be easily transferred inside of the pores, and thereby, the force applied in the polishing step may be uniformly distributed to the whole mounting pad and the whole object to be polished, thus minimizing defects that may be generated during polishing.

Meanwhile, the polyurethane mounting pad may comprise a hydrolysate or a trans-esterification product of polyurethane resin having weight average molecular weight of 220,000 to 1,000,000.

If a polyurethane resin composition comprising the polyurethane resin having weight average molecular weight of 220,000 to 1,000,000 and an organic solvent such as DMF solvent is wet-solidified in a solidification bath containing an organic solvent and water, polyurethane resin having a plurality of pores formed inside may be obtained by phase separation of the components of the resin composition. The polyurethane resin may comprise pores having the longest diameter of 50$\mu$m to 2 mm and an aspect ratio of 2 to 10 inside, and the weight average molecular weight of the polyurethane resin itself is not significantly changed from the initial range of 220,000 to 1,000,000.

And, if the polyurethane resin obtained by the wet solidification is immersed in an aqueous solution of 40 to 90°C, hydrolysis and/or trans-esterification may occur, and thereby, the molecular weight of the polyurethane resin may decrease while the shape or size of the pores formed inside of the polyurethane resin is maintained. Specifically, the hydrolysate or trans-esterification product may have weight average molecular weight of 90% to 20%, compared to the polyurethane resin having weight average molecular weight of 220,000 to 1,000,000. And, through these processes, a polyurethane mounting pad having the above explained properties may be provided.

The immersion solution for immersing the polyurethane resin may comprise water, a glycerin aqueous solution or an alcohol aqueous solution, and in addition to the solution, it may further comprise an acid catalyst or a base catalyst. The acid catalyst or base catalyst may promote improvement in the physical properties such as compressibility and compression length of the mounting pad, and thus, a mounting pad having excellent Low P compressibility and compression rate can be rapidly and easily prepared.

Specific examples of the acid catalyst may include DBSA(dodecylbenzenesulfonic acid), SDS(sodium dodecylsulfate). HCl, BSA(benzenesulfonic acid), phosphoric acid, Alkyl Sulfonic acid, Butane sulfonic acid, nitric acid, succinic acid, and a mixture thereof, and specific examples of the base catalyst may include EDA(ethylene diamine), TMEDA(tetramethyl ethylenediamine), K0H, Na0H, NaHC03, Pyrolidine, Guanidine, Glycine, TMAH(tetramethylammonium hydroxide), TEAH(tetraethylammonium hydroxide), or a mixture thereof.

Particularly, if a catalyst having excellent surface activity is used as the acid catalyst or base catalyst included in the aqueous solution, hydrolysis or trans-esterification of the urethane bonding or ester bonding parts of the polyurethane resin may be promoted to decrease weight average molecular weight and hardness of the polyurethane mounting pad within a short time, and as the catalyst having excellent surface activity, DBSA(dodecylbenzenesulfonic acid), SDS(sodium dodecylsulfate), HCl. BSA(benzenesulfonic acid), phosphoric acid, and the like may be used.

Meanwhile, the polyurethane mounting pad may be prepared by the method further comprising washing and drying the wet-solidified product of the polyurethane resin composition; polishing the surface of the wet-solidified product; or forming an adhesive layer on the surface of the polished wet-solidified product.

Specifically, the step of wet-solidifying the resin composition comprising polyurethane resin and a DMF solvent may comprise the steps of forming the polyurethane resin composition; coating or introducing the polyurethane resin composition on a substrate or in a mold to form a coating layer; and solidifying the coating layer.

And, after the step of wet-solidifying the polyurethen resin composition comprising polyurethane resin and a DMF solvent, the steps of washing, dehydrating and drying the solidified product of the resin composition may be continuously conducted. In the steps of washing, dehydrating and drying the solidified product of the resin composition, any methods and apparatuses known to be usable in the preparation of a mounting pad may be used without specific limitations.

The step of solidifying the coating layer may be conducted by introducing the substrate or mold on which the coating layer is formed into a solidification bath filled with a dimethylformamide aqueous solution or water. In the solidification process, as dimethylformamide in the polyurethane resin is replaced with water, the polyurethane resin is gradually solidified, and thereby, a plurality of pores may be formed. The concentration of the aqueous solution filled in the solidification bath or the amount of the aqueous solution or water are not specifically limited, and may be appropriately controlled according to the reaction conductions and the physical properties of the prepared mounting pad. After the solidification process, water and DMF may remain in the polishing pad, and the water, DMF solvent and other components may be removed in the polishing pad by washing the solidified product and drying it in an oven.

And, the step of polishing (or buffing) the surface of the wet-solidified product is a process of peeling the polyurethane film having low hardness (100% modulus 1 to 10) using a roll wound with a sandpaper rotating at high speed, wherein high energy is applied.

In the polishing (or buffing) process, a film to be polished may be peeled hundreds of um at a time, or peeled tens of um several times. If a film having low hardness is polished a lot at a time, thickness difference or difference in polishing(buffing) level may be generated to the MD (machine direction), and the energy non-uniformly stacked on the mounting pad may be non-uniformly transcribed from the polishing apparatus to a film to be polished, for example, a glass substrate of a display and the like, thus generating lines or stripes in the TD (Transverse Direction).

And, in the step of forming an adhesive layer on the surface of the buffed wet-solidified product, the adhesive layer may be formed using any methods and constructions known to be used in the preparation of the final product of a mounting pad. For example, the adhesive layer may be formed by coating adhesive, for example pressure sensitive adhesive(PSA) and the like, on the surface of the wet-solidified product or on the surface of the surface-polished wet-solidified surface, or it may be formed by laminating a pressure sensitive double-sided adhesive film on the surface of the wet-solidified product or on the surface of the surface-polished wet-solidified product.

And, the polyurethane mounting pad may be prepared by a method further comprising the step of heat treating the wet-solidified product on which the adhesive layer is formed.

The heat treatment may be conducted at a temperature of 60°C to 180°C, preferably 70°C to 150°C, for 1 to 100 minutes, preferably 10 to 60 minutes. If heat treatment is conducted at too low temperature, the effect of the heat treatment may not be properly exhibited, and thus, it may be difficult for the polyurethane mounting pad to have uniform thickness, pressure distribution or tension distribution, and non-uniform polishing or defective product may be generated. If the heat treatment is conducted at too high temperature, the polyurethane resin layer may be changed, and the adhesive layer that can be further included may be volatilized or changed.

By heat treating the wet-solidified product on which the adhesive layer is formed, a phenomenon wherein the thickness of the prepared mounting pad becomes locally non-uniform or pressure or tension is concentrated to a part of the mounting pad can be overcome. Thereby, the prepared polyurethane mounting pad may be sufficiently compressed at low pressure conditions, under which practical glass polishing is conducted, to evenly distribute non-uniform force added to glass, thus decreasing defective polishing rate.

The polyurethane resin composition may comprise 1 to 30 wt%, preferably 5 to 25 wt% of the polyurethane resin. If the content of the polyurethane resin is too small in the resin composition, it may be difficult to appropriately form the body of the mounting pad, and the viscosity of the composition may be too lowered, and thus, the composition may not be easily applied for a coating process for the preparation of the mounting pad. And, if the content of the polyurethane resin is too large in the resin composition, the density of the obtained polyurethane mounting pad may become unnecessarily large, or the viscosity of the composition may become too large, and thus, the composition may not be easily applied for a coating process for the preparation of the mounting pad.

The polyurethane resin composition may comprise 50 to 90wt%, preferably 50 to 85wt% of a dimethylformamide(DMF) solvent. The dimethylformamide(DMF) means N,N'-dimethylmethanamide. If the polyurethane resin composition is solidified, a polyurethane mounting pad having pores inside may be formed by phase separation of the components of the resin composition, for example, polyurethane resin, water and DMF solvent. Namely, in the process of solidifying the resin composition, the DMF solvent existing in the polyurethane resin is replaced with water in a solidification bath, and after the solidification is completed, a polyurethane resin for a mounting pad having pores inside may be formed. If the content of the DMF solvent is too small in the resin composition, the formation of pores inside of the resin may not be smooth in the solidification process, and if the content is too large, the ratio of the polyurethane resin may be significantly decreased thus making it difficult to prepare a polyurethane mounting pad having appropriate physical properties.

And, the polyurethane resin composition may further comprise anionic surfactant. The anionic surfactant may allow water to be uniformly penetrated over the whole area of the composition to be solidified, and thus, phase separation of each component of the polyurethane resin composition may not be concentrated to a specific part, thus uniformly forming pores inside of the mounting pad. The content of the anionic surfactant may be appropriately controlled considering the physical properties of the prepared mounting pad or process conditions, and the like, and for example, it may be included in the content of 0.01 to 5 wt% in the polyurethane resin composition for a mounting pad. The examples of the anionic surfactant may include dodecylbenzenesulfuonic acid, dodecylbenznesulfonic acid derivatives, succinic acid, succinic acid derivatives, dodecylsulfate, dodecylsulfate derivatives, or a mixture thereof. And, it is preferable to use dodecylbenzenesulfonic acid or derivatives thereof and succinic acid or derivative thereof in combination as the anionic surfactant, so as to appropriately control the shape or size of the pores formed inside of the mounting pad and improve the physical properties of the prepared mounting pad.

The polyurethane resin composition may further comprise non-ionic surfactant so as to planarizing the surface of the pad or increase absorption of the mounting pad. Examples of the non-ionic surfactant may include silicon polymer, silicon oil, glycerol polymer or hydrocarbon polymer and the like. The content of the non-ionic surfactant may be appropriately controlled considering the physical properties of the prepared mounting pad or process conditions and the like, and for example, it may be included in the content of 0.01 to 5 wt% in the polyurethane resin composition for a mounting pad.

And, the polyurethane resin composition may further comprise at least one additive selected from the group consisting of a coloring agent, a water repellent, a filler, a pore size regulator, and a pigment. The content of the additives may be appropriately controlled considering the physical properties of the prepared mounting pad or process conditions, and the like, and for example, each additive may be included in the content of 0.01 to 10 wt% in the resin composition.

[ADVANTAGEOUS EFFECTS]

According to the present invention, provided is a polyurethane mounting pad that has high compressibility and excellent elastic power under practical polishing conditions, and can realize more uniform and high efficiency polishing to decrease defective polishing rate.

[BRIEF DESCRIPTION OF DRAWINGS]

Fig. 1 shows a glass substrate polished using the polyurethane mounting pad of Example 1.
Fig. 2 shows a glass substrate polished using the polyurethane mounting pad of Example 2.
Fig. 3 shows a glass substrate polished using the polyurethane mounting pad of Comparative Example 2.
Fig. 4 shows a glass substrate polished using the polyurethane mounting pad of Comparative Example 3.

[DETAILED DESCRIPTION OF THE EMBODIMENTS]

The present invention will be explained in detail with reference to the following Examples. However, these Examples are only to illustrate the invention, and the scope of the invention is not limited thereto.

<Examples and Comparative Examples: Synthesis of polyurethane mounting pad and measurement of Low P compressibility thereof>

<Example 1>

The resin composition comprising the components of the following Table 1 was coated on a PET film to a thickness of $1700\mu m$, and then, the coating layer was wet-solidified, washed, dehydrated and dried to obtain a polyurethane resin film layer including pores inside. The obtained polyurethane resin film layer was buffed using a roll wound with a sandpaper rotating at high speed so as to have more uniform thickness and high uniformity, and a pressure sensitive double-sided adhesive tape was laminated on one side of the buffed polyurethane resin film layer to obtain a polyurethane mounting pad. And, the mounting pad was immersed in water of 60°C for 24 hours, and dried in an oven to prepare a finished product of polyurethane mounting pad.

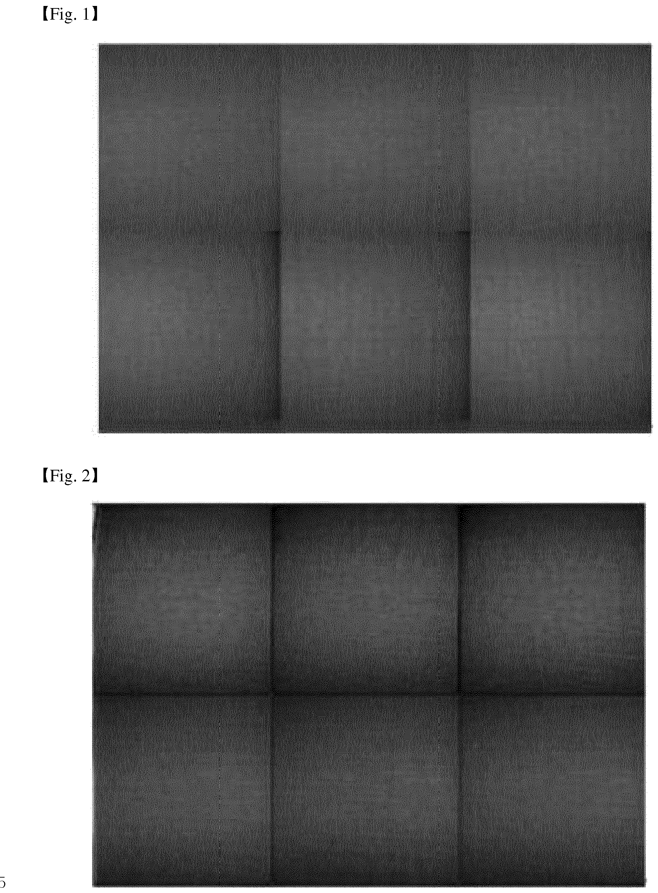

The polyurethane mounting pad was installed in a polishing apparatus to polish a glass substrate for 10 minutes. And, the polishing result was observed in a Xenon lamp in a transparent mode and shown in Fig. 1, and JIS L1021-16 compressibility, Low P compressibility, and Low P compression length of the polyurethane mounting pad are show in the following Table 2.

[Polyurethane layer: 1200$\mu$m, adhesive layer: 250$\mu$m]

[Table 1]

| Components (parts by weight) | Polyurethane resin (SW-80LM) 380,000 | Non-ionic surfactant SD-7 | SD-11 | Coloring agent | DMF | Water repellent | Filler | EG |
|---|---|---|---|---|---|---|---|---|
| Example 1 | 150 | 2 | 4 | 6 | 15 | 2 | 1 | 2 |
| * polyurethane resin SW-80LM: a solution of 20 wt% of polyurethane resin in DMF <br> * Measurement of Low P compressibility and Low P compression length | | | | | | | | |

A 2.5m$^2$*3.0cm$^2$(width*length) specimen of a pad was prepared, the initial load of 5g/cm$^2$ was applied to the specimen for 30 seconds, and then, the initial thickness was measured using a dial gauge or laser(TO), and it was allowed to stand under the load of 100g/cm$^2$ for 5 minutes, and then, the thickness was measured under pressure(T1). Each measured thickness was applied to the following Formula to calculate Low P compressibility.

$$(1) \text{ Low P compressibility(\%)=(T0-T1)*100/T0}$$

$$(2) \text{ Low P compression length= T0-T1}$$

<Example 2 >

A polyurethane mounting pad was obtained by the same method as Example 1, except adding 7 parts by weight of SD-11 instead of 4 parts by weight.

[polyurethane layer: 1200$\mu$m, adhesive layer: 250$\mu$m]

The JIS compressibility, Low P compressibility, Low P compression length of the prepared polyurethane mounting pad, and the polishing result are shown in the following Table 2 and Fig. 2.

< Example 3 >

A polyurethane mounting pad was obtained by the same method as Example 1, except immersing in a 5% glycerin aqueous solution of 70°C for 2 days instead of immersing in water of 60°C for 24 hours.

[polyurethane layer: 1200$\mu$m, adhesive layer: 250$\mu$m]

The JIS compressibility, Low P compressibility, Low P compression length of the prepared polyurethane mounting pad are shown in the following Table 2.

<Example 4 >

A polyurethane mounting pad was obtained by the same method as Example 3, except that 20 parts by weight of DMF were added to the resin composition instead of 15 parts by weight, 6 parts by weight of SD-11 were added, and the resin composition was coated on the PET film to a thickness of $1300\mu$m instead of $1700\mu$m.

[polyurethane layer: $820\mu$m, adhesive layer: $250\mu$m]

The JIS compressibility, Low P compressibility, Low P compression length of the prepared polyurethane mounting pad are shown in the following Table 2.

<Example 5 >

A polyurethane mounting pad was obtained by the same method as Example 4, except that SD-7 and filler were not added.

[polyurethane layer: $720\mu$m, adhesive layer: $250\mu$m]

The JIS compressibility, Low P compressibility, Low P compression length of the prepared polyurethane mounting pad are shown in the following Table 2.

<Comparative Example 1 >

A polyurethane mounting pad was obtained by the same method as Example 1, except that the pad was not immersed in water of 60°C for 24 hours.

[polyurethane layer: $1200\mu$m, adhesive layer: $250\mu$m]

The JIS compressibility, Low P compressibility, Low P compression length of the prepared polyurethane mounting pad are shown in the following Table 2.

<Comparative Example 2 >

A polyurethane mounting pad was obtained by the same method as Comparative Example 1, except that the resin composition was coated on the PET film to a thickness of $1200\mu$m instead of $1700\mu$m.

[polyurethane layer: $770\mu$m, adhesive layer: $250\mu$m]

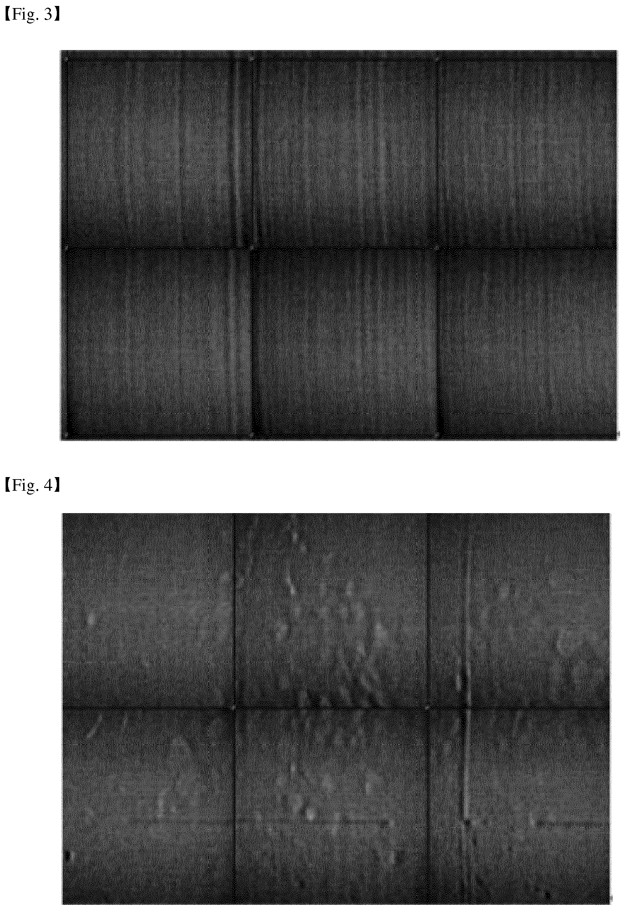

The JIS compressibility, Low P compressibility, Low P compression length of the prepared polyurethane mounting pad, and the polishing result are shown in the following Table 2 and Fig. 3.

<Comparative Example 3 >

A polyurethane mounting pad was obtained by the same method as Comparative Example 2, except that buffing level was increased to decrease the thickness of the mounting pad to 400 $\mu$m.

[polyurethane layer: $400\mu$m, adhesive layer: $250\mu$m]

The JIS compressibility, Low P compressibility, Low P compression length of the prepared polyurethane mounting pad, and the polishing result are shown in the following Table 2 and Fig. 4.

[Table 2]

| | JIS compressibility (%) | Low P compression rate(%) | Low P compression length($\mu$m) | Polishing results |
|---|---|---|---|---|
| Example 1 | 47 | 1.4 | 15 | light pad mark exists, but OK |
| Example 2 | 50 | 3.1 | 33 | OK |
| Example 3 | 54 | 4.4 | 48 | OK |
| Example 4 | 50 | 6.2 | 45 | OK |

(continued)

|  | JIS compressibility (%) | Low P compression rate(%) | Low P compression length($\mu$m) | Polishing results |
|---|---|---|---|---|
| Example 5 | 51 | 6.5 | 48 | OK |
| Comparative Example 1 | 46 | 0.8 | 10 | local pad mark generated |
| Comparative Example 2 | 44 | 1.8 | 14 | local pad mark generated |
| Comparative Example 3 | 47 | 2.5 | 10 | local pad mark generated |

<Comparison of Examples and Comparative Examples>

As shown in Table 2, the polyurethane mounting pads of Examples 1 to 5 exhibit low density and hardness and can be compressed more deeply, thus increasing compression depth, and thereby, Low P compressibility increases to 1% or more. And, the polyurethane mounting pads of Examples 1 to 5 exhibit Low P compression length of 15$\mu$m or more, and thus, as shown in Fig. 1 and Fig. 2, it can polish a glass substrate, which is a film to be polished, uniformly and with high efficiency at practical polishing.

To the contrary, the polyurethane mounding pads of Comparative Examples exhibit Low P compressibility of less than 1%, or Low P compression length of less than 15$\mu$m, and as shown in Fig. 3 and Fig. 4, regular lines are observed in the TD on the polished glass substrate, confirming that defective polishing is generated.

## Claims

1. A polyurethane mounting pad **characterized in** having Low P compressibility of 1 to 10%, the Low P compressibility being the ratio of the difference between a first thickness and a second thickness to the first thickness, the first thickness being measured by applying a pressure of 5g/cm$^2$ to a thickness direction of the mounting pad, and the second thickness being measured by applying a pressure of 100g/cm$^2$ to a thickness direction of the mounting pad, and

   **in that** Low P compression length, which is the difference between the first thickness and the second thickness, is 15 to 100 $\mu$m.

2. The polyurethane mounting pad according to claim 1, wherein the Low P compressibility is represented by the following General Formula 1, and the Low P compression length is represented by the following General Formula 2:

$$[\text{General Formula 1}]$$

$$\text{Low P compressibility(\%)}=(T0-T1)*100/T0$$

$$[\text{General Formula 2}]$$

$$\text{Low P compression length} = T0-T1$$

in the General Formulae 1 and 2,

T0 is a first thickness measured by applying a pressure of 5g/cm$^2$ to a thickness direction of the mounting pad, T1 is a second thickness measured by applying a pressure of 100g/cm$^2$ to a thickness direction of the mounting pad.

3. The polyurethane mounting pad according to claim 1, wherein the Low P compressibility is 1 to 8%.

4. The polyurethane mounting pad according to claim 1, wherein the Low P compression length is 15 to 60 $\mu$m.

5. The polyurethane mounting pad according to claim 1, wherein the pressure of 5g/cm$^2$ is applied for 10 seconds to 1 minutes.

6. The polyurethane mounting pad according to claim 1, wherein the polyurethane mounting pad has a density of 0.10g/cm$^2$ to 0.50g/cm$^2$.

7. The polyurethane mounting pad according to claim 1, wherein the pressure of 100 g/cm$^2$ is applied for 1 to 10 minutes.

8. The polyurethane mounting pad according to claim 1, wherein the polyurethane mounting pad has a thickness of 0.1mm to 3.0mm.

9. The polyurethane mounting pad according to claim 1, wherein the polyurethane mounting pad comprises pores having the longest diameter of 50 $\mu$m to 2 mm and an aspect ratio of 2 to 10 inside.

10. The polyurethane mounting pad according to claim 1, wherein the polyurethane mounting pad comprises a hydrolysate or a trans-esterification product of polyurethane resin having weight average molecular weight of 220,000 to 1,000,000.

11. The polyurethane mounting pad according to claim 10, wherein the hydrolysate or transe-sterification product is obtained by immersing the polyurethane resin in an aqueous solution of 40 to 90°C.

12. The polyurethane mounting pad according to claim 11, wherein the hydrolysate or trans-esterification product has weight average molecular weight of 90% to 20%, compared to the polyurethane resin.


**Patentansprüche**

1. Polyurethanunterlage, **gekennzeichnet dadurch, dass** sie eine niedrige P-Kompressibilität von 1 bis 10% aufweist, wobei die niedrige P-Kompressibilität das Verhältnis des Unterschieds zwischen einer ersten Dicke und einer zweiten Dicke zu der ersten Dicke ist, wobei die erste Dicke durch Beaufschlagen eines Drucks von 5 g/cm$^3$ in einer Dickenrichtung der Unterlage gemessen wird, und wobei die zweite Dicke durch Beaufschlagen eines Drucks von 100 g/cm$^3$ in einer Dickenrichtung auf die Unterlage gemessen wird, und
dass eine niedrige P-Kompressionslänge, welche der Unterschied zwischen der ersten Dicke und der zweiten Dicke ist, 15 bis 100 $\mu$m ist.

2. Polyurethanunterlage nach Anspruch 1, wobei die niedrige P-Kompressibilität durch die folgende allgemeine Formel 1 dargestellt wird und die niedrige P-Kompressionslänge durch die folgende allgemeine Formel 2 dargestellt wird:

$$[\text{Allgemeine Formel 1}]$$

$$\text{Niedrige P-Kompressibilität (\%)} = (T_0 - T_1) * 100 / T_0$$

$$[\text{Allgemeine Formel 2}]$$

$$\text{Niedrige P-Kompressionslänge} = T_0 - T_1,$$

wobei in den allgemeinen Formeln 1 und 2

$T_0$ eine erste Dicke ist, gemessen durch Beaufschlagen eines Drucks von 5 g/cm$^3$ in einer Dickenrichtung der Unterlage,

$T_1$ eine zweite Dicke ist, gemessen durch Beaufschlagen eines Drucks von 100 g/cm3 in einer Dickenrichtung der Unterlage.

3. Polyurethanunterlage nach Anspruch 1, wobei die niedrige P-Kompressibilität 1 bis 8% ist.

4. Polyurethanunterlage nach Anspruch 1, wobei die niedrige P-Kompressionslänge 15 bis 60 $\mu$m ist.

5. Polyurethanunterlage nach Anspruch 1, wobei der Druck von 5 g/cm$^3$ für 10 Sekunden bis 1 Minute beaufschlagt wird.

6. Polyurethanunterlage nach Anspruch 1, wobei der Druck von 100 g/cm$^3$ für 1 bis 10 Minuten beaufschlagt wird.

7. Polyurethanunterlage nach Anspruch 1, wobei die Polyurethanunterlage eine Dichte von 0,10 g/cm$^3$ bis 0,50 g/cm$^3$ aufweist.

8. Polyurethanunterlage nach Anspruch 1, wobei die Polyurethanunterlage eine Dicke von 0,1 mm bis 3,0 mm aufweist.

9. Polyurethanunterlage nach Anspruch 1, wobei die Polyurethanunterlage Poren mit dem längsten Durchmesser von 50 $\mu$m bis 2 mm und ein Längenverhältnis von 2 bis 10 im Inneren umfasst.

10. Polyurethanunterlage nach Anspruch 1, wobei die Polyurethanunterlage ein Hydrolysat oder ein Umesterungsprodukt von Polyurethanharz mit einem Gewichtsmittelmolekulargewicht von 220.000 bis 1.000.000 umfasst.

11. Polyurethanunterlage nach Anspruch 10, wobei das Hydrolysat oder Umesterungsprodukt durch Eintauchen des Polyurethanharzes in eine wässrige Lösung von 40 bis 90°C erhalten wird.

12. Polyurethanunterlage nach Anspruch 11, wobei das Hydrolysat oder Umesterungsprodukt ein Gewichtsmittelmolekulargewicht von 90% bis 20%, verglichen mit dem Polyurethanharz, aufweist.


**Revendications**

1. Un patin de support en polyuréthane **caractérisé en ce qu'**il a une compressibilité à basse pression comprise entre 1 et 10%, la compressibilité à basse pression étant le rapport de la différence entre une première épaisseur et une deuxième épaisseur à la première épaisseur, la première épaisseur étant mesurée en appliquant une pression de 5g/cm$^2$ à une direction d'épaisseur du patin de support, et la deuxième épaisseur étant mesurée en appliquant une pression de 100g/cm$^2$ à une direction d'épaisseur du patin de support, et **en ce qu'**une longueur de compression à basse pression, qui est la différence entre la première épaisseur et la deuxième épaisseur, est comprise entre 15 et 100 $\mu$m.

2. Le patin de support en polyuréthane selon la revendication 1, dans lequel la compressibilité à basse pression est représentée par la Formule générale 1 ci-après et la longueur de compression à basse pression est représentée par la Formule générale 2 ci-après :

[Formule générale 1]

Compressibilité à basse pression (%)=(T0-T1)*100/T0

[Formule générale 2]

Longueur de compression à basse pression = T0-T1

dans les Formules générales 1 et 2,

T0 est une première épaisseur mesurée en appliquant une pression de 5 g/cm$^2$ à une direction d'épaisseur du patin de support,
T1 est une deuxième épaisseur mesurée en appliquant une pression de 100 g/cm$^2$ à une direction d'épaisseur du patin de support.

**3.** Le patin de support en polyuréthane selon la revendication 1, dans lequel la compressibilité à basse pression est comprise entre 1 et 8%.

**4.** Le patin de support en polyuréthane selon la revendication 1, dans lequel la longueur de compression à basse pression est comprise entre 15 et 60 $\mu$m.

**5.** Le patin de support en polyuréthane selon la revendication 1, dans lequel la pression de 5g/cm$^2$ est appliquée pendant 10 secondes à 1 minute.

**6.** Le patin de support en polyuréthane selon la revendication 1, dans lequel le patin de support en polyuréthane a une densité comprise entre 0,10 g/cm$^2$ et 0,50 g/cm$^2$.

**7.** Le patin de support en polyuréthane selon la revendication 1, dans lequel la pression de 100 g/m$^2$ est appliquée pendant 1 à 10 minutes.

**8.** Le patin de support en polyuréthane selon la revendication 1, dans lequel le patin de support en polyuréthane a une épaisseur comprise entre 0,1 mm et 3,0 mm.

**9.** Le patin de support en polyuréthane selon la revendication 1, dans lequel le patin de support en polyuréthane comprend des pores ayant le diamètre le plus long compris entre 50 $\mu$m et 2 mm et un aspect rapport compris entre 2 et 10 à l'intérieur.

**10.** Le patin de support en polyuréthane selon la revendication 1, dans lequel le patin de support en polyuréthane comprend un hydrolysat ou un produit de trans-estérification de résine polyuréthane ayant une masse moléculaire moyenne en poids comprise entre 220 000 et 1 000 000.

**11.** Le patin de support en polyuréthane selon la revendication 10, dans lequel l'hydrolysat ou produit de trans-estérification est obtenu en immergeant la résine polyuréthane dans une solution aqueuse comprise entre 40 et 90°C.

**12.** Le patin de support en polyuréthane selon la revendication 11, dans lequel l'hydrolysat ou produit de trans-estérification a une masse moléculaire moyenne en poids comprise entre 90% et 20%, comparé à la résine polyuréthane.

【Fig. 1】

【Fig. 2】

【Fig. 3】

【Fig. 4】

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20120081955 A
- JP 2007245571 A